# EUROPÄISCHE PATENTSCHRIFT

(11) **EP 3 250 497 B1**
(45) Veröffentlichungstag und Bekanntmachung des Hinweises auf die Patenterteilung: **24.04.2019**
(21) Anmeldenummer: 16702080.9
(22) Anmeldetag: 28.01.2016
(51) Int. Cl.: B66F 9/14, B66F 9/07, B65G 1/04

(54) **FLURFÖRDERER UND SYSTEM MIT EINEM FLURFÖRDERER**
FLOOR CONVEYOR AND SYSTEM WITH A FLOOR CONVEYOR
CONVOYEUR DE SOL ET SYSTÈME AVEC UN CONVOYEUR DE SOL

(30) Priorität: 30.01.2015 DE 102015101416
(43) Veröffentlichungstag der Anmeldung: 06.12.2017
(73) Patentinhaber: Hubtex Maschinenbau GmbH & Co. Kg, 36041 Fulda (DE)
(72) Erfinder: KELLER, Jürgen, 36137 Großenlüder (DE)
(74) Vertreter: Kluin, Jörg-Eden
(86) Internationale Anmeldenummer: PCT/EP2016/051769
(87) Internationale Veröffentlichungsnummer: WO 2016/120368

(56) Entgegenhaltungen:
- EP-A1- 0 192 259
- EP-A1- 0 857 152
- WO-A1-02/076859
- WO-A1-2004/103883
- CH-A- 463 388
- US-A- 4 358 239
- US-A- 5 813 816
- US-A1- 2005 036 858
- US-B1- 6 619 902

## Beschreibung

Die Erfindung betrifft einen Flurförderer und ein System mit einem Flurförderer.

Flurförderer und Systeme mit Flurförderern sind bereits bekannt.

Beispielsweise ist aus der CH 463388 A ein Gabelstapler bekannt, der Rollpaletten mittels einer auf der Gabel angeordneten Vorrichtung, die Kettenbänder aufweist, seitlich in Regale einlagern kann. Ferner ist aus der US 4,358,239 A ein Kran mit einem höhenmäßig positionierbaren Schlitten und einem Greifer bekannt, der auf dem Schlitten mittels einer Führung zur limitierten seitlichen Bewegbarkeit befestigt ist. Zum Ein- und Auskoppeln mit dem Schlitten kann ein KugelkopfBolzen eine lineare Bewegung vollziehen. Aus der EP 0 857 152 A1 ist zudem eine Vorrichtung zum Ausziehen von Rollpaletten bekannt.

Nachteilig an bekannten Flurförderern und bekannten Systemen mit Flurförderern ist, dass die Übergabe und die Aufnahme von Gütern nicht so schnell erfolgt, wie es wünschenswert wäre oder die Flurförderer aufwendig zu bedienen oder aufwendig herzustellen sind.

Die Erfindung hat es sich zur Aufgabe gemacht, einen Flurförderer und ein System mit einem Flurförderer zu schaffen, welche hinsichtlich zumindest eines der genannten Nachteile verbessert sind.

Diese Aufgabe wird durch den in Anspruch 1 wiedergegebenen Flurförderer und das in Anspruch 5 wiedergegebene System mit einem Flurförderer gelöst. Der erfindungsgemäße Flurförderer weist bevorzugt eine Hebevorrichtung zum Anheben und Absenken von Gütern auf.

Mit dem Begriff "Flurförderer" wird im Rahmen dieser Druckschrift insbesondere ein Flurförderzeug bezeichnet, mit Rädern, die auf Flur laufen und frei lenkbar sind, das zum Befördern, Ziehen oder Schieben von Lasten eingerichtet ist, und zur innerbetrieblichen Verwendung bestimmt ist. Auch Regalförderer, die nicht frei im Flur fahren können, sondern in irgendeiner Form, etwa Schienenführung oder Nut, an ein Regalsystem gebunden sind, werden im Rahmen dieser Druckschrift mit dem Begriff "Flurförderer" bezeichnet.

Der Flurförderer umfasst bevorzugt einen Regalförderer oder ist als Regalförderer ausgebildet. Der Begriff "Regalförderer" wird im Rahmen dieser Druckschrift synonym mit dem Begriff "Regalbediengerät" verwendet.

Mit Vorteil weist der Flurförderer eine Hebevorrichtung zum Anheben und Absenken von auf Paletten angeordneten Gütern auf. Der Flurförderer weist darüber hinaus eine Verlagerungseinrichtung zum Verlagern der Güter oder der Paletten relativ zu der Hebevorrichtung auf. Mit dem Begriff "Paletten" werden im Rahmen dieser Druckschrift insbesondere Transportpaletten bezeichnet.

Hierdurch ist eine Voraussetzung für eine schnellere Güteraufnahme und -abgabe geschaffen. Denn die Hebevorrichtung, die bei einem Gabelstapler beispielsweise in der Gabel umfasst, muss nicht selbst über ein Regal und wieder zurück bewegt werden, sondern kann, wie bevorzugt, derart ausgeführt sein, dass von ihr, genauer gesagt, von Teilen von ihr, lediglich eine Bewegung nach oben oder unten durchführbar ist.

Mit Vorteil erlaubt die Verlagerungseinrichtung ein Verlagern von Gütern oder Paletten auf die Hebevorrichtung und von der Hebevorrichtung herunter und zwar bevorzugt in zwei verschiedene Richtungen relativ zur Hebevorrichtung. Diese beiden Richtungen sind bevorzugt entgegengesetzt und in einer Ausführungsform horizontal und weiter bevorzugt senkrecht zur Fahrtrichtung oder Hauptfahrtrichtung des Flurförderers ausgerichtet.

Bei der Hebevorrichtung kann einen Hubmast umfassen.

Die beiden Richtungen sind insbesondere zur rechten und zur linken Seite des Flurförderers ausgerichtet.

Mit Vorteil weist die Hebevorrichtung eine Aufnahmeeinrichtung zur Aufnahme der Güter auf. In der Ausführungsform, bei der die Hebevorrichtung zum Anheben und Absenken von Paletten geeignet ist, auf denen Güter angeordnet sind, weist die Hebevorrichtung mit Vorteil eine Palettenaufnahmeeinrichtung zur Aufnahme der Paletten auf. Die Aufnahmeeinrichtung umfasst bevorzugt eine Aufnahmefläche. Die Verlagerungseinrichtung ist mit Vorteil zumindest im Wesentlichen unterhalb der Aufnahmefläche vorgesehen.

Erfindungsgemäß umfasst die Verlagerungseinrichtung Kraftübertragungsmittel, zur Ausübung einer Verlagerungskraft auf die Güter. In der Ausführungsform, in der die Güter auf Paletten angeordnet sind, sind die Kraftübertragungsmittel mit Vorteil als Palettenkraftübertragungsmittel ausgeführt, zur Übertragung einer Verlagerungskraft auf die Paletten. Die Kraftübertragungsmittel umfassen mit Vorteil einen Mitnehmer oder sind als Mitnehmer ausgeführt.

Von den Kraftübertragungsmitteln ist erfindungsgemäß eine lineare - bevorzugt waagerechte - Transportbewegung durchführbar, die weiter bevorzugt durch die Überlagerung einer Schwenkbewegung mit einer translatorischen Bewegung bewirkt ist. Es hat sich gezeigt, dass hierdurch eine Voraussetzung für eine besonders geeignete Verlagerungseinrichtung geschaffen ist. Die Transportbewegung der Kraftübertragungsmittel ist bevorzugt ausschließlich linear und vorzugsweise waagerecht.

Mit Vorteil sind die Kraftübertragungsmittel, während des Verlagerns einer Palette, ausschließlich linear - bevorzugt waagerecht - bewegbar.

Erfindungsgemäß umfasst die Verlagerungseinrichtung einen Schwenkarm, der eine Längenverstellvorrichtung umfasst. Mit Vorteil umfasst der Flurförderer genau eine Verlagerungseinrichtung und diese Verlagerungseinrichtung umfasst weiter bevorzugt genau einen Schwenkarm. Der Schwenkarm ist erfindungsgemäß mit einer Seite - bevorzugt seiner unteren Seite - schwenkbar an dem übrigen Flurförderer angeordnet, bevorzugt gelagert. An der anderen Seite - bevorzugt seiner oberen Seite - des Schwenkarms sind erfindungsgemäß die Kraftübertragungsmittel angeordnet. Eine besonders robuste Längenverstellvorrichtung ergibt sich, wenn diese einen Linearmotor umfasst. Mit Vorteil umfasst die Längenverstellvorrichtung eine Teleskopiereinrichtung. Mit Vorteil umfasst der Linearmotor einen Fluid-Zylinder, der vorzugsweise eine Kolbenstange aufweist. Der Fluid-Zylinder kann eine Staubschutzkappe aufweisen.

Der Schwenkarm vollzieht bevorzugt eine Schwenkbewegung und durch die Längenverstellung wird bevorzugt die translatorische Bewegung von Teilen der Verlagerungseinrichtung - insbesondere einer Kolbenstange - bewirkt.

In einer Ausführungsform übt die Verlagerungseinrichtung keine Hubkräfte auf die Güter oder die Paletten aus. Es hat sich gezeigt, dass dies entbehrlich ist und eine besonders schnelle Bedienung des Flurförderers erlaubt.

Mit Vorteil ist ein Motor zum Verschwenken des Schwenkarms vorgesehen und weiter bevorzugt eine Steuerungs- oder Regelungseinrichtung für diese Schwenkbewegung.

Der Schwenkarm weist bevorzugt eine Teleskopiereinrichtung mit Positionier- und Linearregelung auf.

Der Schwenkarm ist bevorzugt sowohl in seiner Winkelstellung, als auch in seiner Länge regelbar. Mit Vorteil ist ein Motor zur Bewirkung der Schwenkbewegung vorgesehen. Mit Vorteil ist ein Linearmotor zur Bewirkung der Längenänderung des Schwenkarms vorgesehen.

Der Schwenkarm dient bevorzugt zum Ein- und Auslagern von rollengelagerten Paletten.

Mit Vorteil ist zwischen den Kraftübertragungsmitteln und den Kraftaufnahmemitteln ein Formschluss erzielbar.

Der Flurförderer kann mit Vorteil eine Fahrbewegung durchführen. Teile des Flurförderers können mit Vorteil eine Hubbewegung durchführen. Der Flurförderer ist in der Ausführungsform als Regalförderer mit Vorteil zur beidseitigen Bestückung und weiter bevorzugt Entnahme von Regalfächern geeignet, die mit Vorteil über- und nebeneinander angeordnet sein können.

Der Schwenkarm ist bevorzugt kraftbetrieben und weist mit Vorteil einen kraftbetriebenen Teleskopausschub auf. Hierdurch und in Verbindung mit der bevorzugt vorgesehenen Positioniersteuerung und weiter bevorzugt vorgesehenen Positionierregelung des Schwenkarms sind durch diesen bevorzugt die erforderlichen Positionen der Kraftübertragungsmittel zum Ein- und Auslagern der Paletten ansteuerbar. Die Kraftübertragungsmittel sind in Kraftaufnahmemittel, die als Palettentaschen ausgeführt sein können, fahrbar.

Die erforderliche waagerechte Transportbewegung der Kraftübertragungsmittel ist hierdurch sichergestellt.

Die Aufgabe wird auch gelöst durch ein System mit einem Flurförderer nach einem der Ansprüche 1 bis 6, welches Paletten zur Aufnahme von Gütern umfasst, wobei die Paletten mit Vorteil als Rollpaletten mit Rollen ausgeführt sind. Das System umfasst Regale, die vorzugsweise Rollflächen für die Rollpaletten bereitstellen. Die Rollflächen können als Rollbahnen ausgeführt sein.

In einer anderen Ausführungsform umfasst das System Paletten zur Aufnahme von Gütern, die nicht als Rollpaletten mit Rollen ausgeführt sind, und die Regale weisen Rollen auf. In dieser Ausführungsform weist die Hebevorrichtung eine als Palettenaufnahmevorrichtung ausgeführte Aufnahmeeinrichtung auf, die Rollen aufweist.

Mit Vorteil sind an den Paletten Kraftaufnahmemittel angeordnet und die Kraftübertragungsmittel der Verlagerungseinrichtung des Flurförderers sind weiter bevorzugt als Palettenkraftübertragungsmittel ausgeführt. Die Kraftübertragungsmittel wirken bevorzugt mit den Kraftaufnahmemitteln zusammen, bevorzugt zum Bewirken einer Verlagerungskraft auf die Paletten. Die Palettenkraftübertragungsmittel umfassen mit Vorteil einen Kugelkopf und die Kraftaufnahmemittel umfassen weiter bevorzugt Palettentaschen, die bevorzugt nach unten offen ausgebildet sind.

Die Kraftübertragungsmittel sind mit Vorteil derart ausgeführt, dass sie, solange sie mit den Kraftaufnahmemitteln zusammenwirken, keine Hubbewegung ausüben.

Der Transport der Paletten erfolgt mit Vorteil über Druck- und Zugbewegung durch einen in Formschluss gebrachten Mitnehmer beim Schwenken.

Die Erfindung soll nun anhand eines in den Zeichnungen gezeigten Ausführungsbeispiels näher erläutert werden.

Die Palettenverlagerung ist schnell und robust möglich. Leerfahrten des Flurförderers sind, da der Flurförderer in einer Position mit Vorteil beide Regale einer Gasse bedienen kann, reduziert.

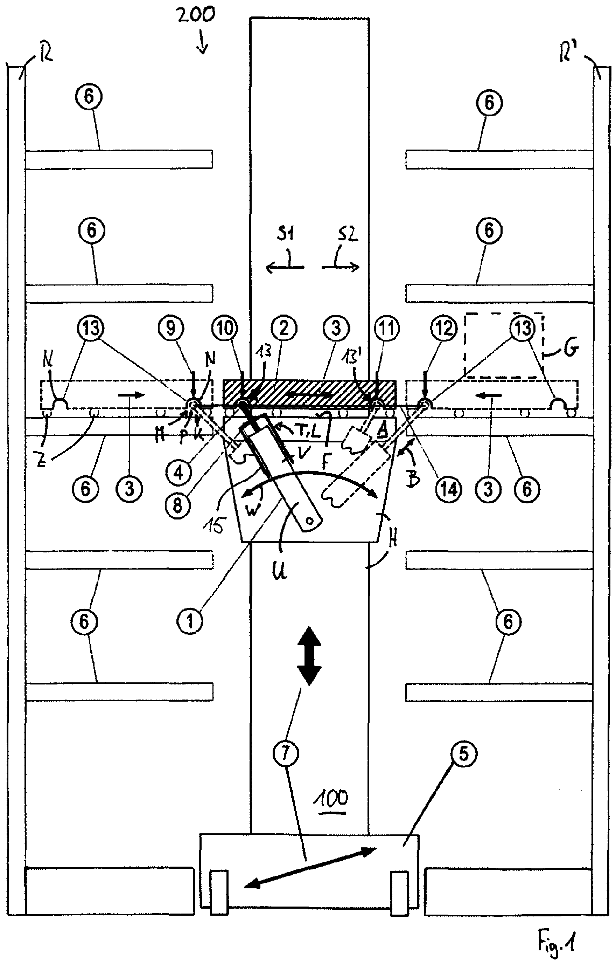

Fig. 1 zeigt eine Frontaldarstellung eines als Regalförderer ausgeführten Flurförderers.

Der in der Figur gezeigte Flurförderer 100 ist als Regalförderer ausgebildet. Er umfasst eine Hebevorrichtung H, die im gezeigten Ausführungsbeispiel einen Hubmast umfasst, an dem eine hoch und runter verlagerbare Aufnahmeeinrichtung A, mit einer Aufnahmefläche F, angeordnet ist.

Der Flurförderer umfasst auch eine Verlagerungseinrichtung V zum Verlagern der Paletten 2.

Die Verlagerungseinrichtung V ist im Wesentlichen unterhalb der Aufnahmefläche F vorgesehen.

Diese Verlagerungseinrichtung V erlaubt ein Verlagern der Paletten 2 auf die Aufnahmeeinrichtung A und von der Aufnahmeeinrichtung A herunter in zwei verschiedenen Richtungen S1, S2 relativ zur Aufnahmeeinrichtung.

Die Fahrtrichtung oder zumindest Hauptfahrtrichtung des Flurförderers ist in der Figur durch den unteren mit 7 bezeichneten Pfeil symbolisiert und verläuft senkrecht zur Bildebene. Die Richtungen S1, S2, in die die Palettenverlagerung möglich ist, verlaufen senkrecht zu dieser (Haupt-) Fahrtrichtung und zumindest im Wesentlichen horizontal. Sie weisen in zwei entgegengesetzte Richtungen. Auf diese Weise ist es möglich, dass, wie in der Figur gezeigt, der Flurförderer in eine Gasse zwischen zwei Regalen R, R' einfährt und Paletten von beiden dieser Regale übernimmt oder an beide dieser Regale übergibt. Eine Verdrehung der Aufnahmeeinrichtung A ist hierfür nicht erforderlich.

Die Verlagerungseinrichtung V weist als Palettenkraftübertragungsmittel P ausgeführte Kraftübertragungsmittel M auf. Die Figur zeigt, dass von diesen Kraftübertragungsmitteln eine lineare und waagerechte Transportbewegung 14 durchführbar ist, und dass diese Bewegung durch die Überlagerung einer Schwenkbewegung W des Schwenkarms, genauer gesagt, des Fluidzylinders mit einer translatorischen Bewegung B der Kolbenstange bewirkt ist.

Die Verlagerungseinrichtung V umfasst genau einen Schwenkarm 1 mit einer Längenverstellvorrichtung L, die als Fluid-Zylinder U, der als Hydraulikzylinder ausgebildet sein kann, ausgeführt ist. Der Schwenkarm 1 ist mit seiner unteren Seite schwenkbar an der Aufnahmeeinrichtung A angeordnet und weist an seiner oberen Seite die Palettenkraftübertragungsmittel P auf. Der Fluid-Zylinder U weist eine Staubschutzkappe 15 auf.

Das in Fig. 1 gezeigte System 200 umfasst einen Flurförderer 100, Paletten 2 und Regale R, R'. Die Paletten 2 sind als Rollpaletten mit Rollen Z ausgeführt. Die Regale R, R' stellen Regalfächer 6 bereit, deren Oberfläche Rollflächen für die Rollpaletten bereitstellen.

Die Palettenkraftübertragungsmittel P sind im gezeigten Ausführungsbeispiel als Kugelkopf K ausgeführt und am Ende der Kolbenstange angeordnet. Die Paletten weisen Kraftaufnahmemittel N auf, zum Zusammenwirken mit diesen Kugelköpfen K, zur Bewirkung einer Verlagerungskraft auf die Paletten 2. Die Kraftaufnahmemittel N weisen nach unten offene Palettentaschen 13, 13' auf.

Der Schwenkarm 1 weist eine Telekopiereinrichtung auf, und ist zum Ein- und Auslagern der rollengelagerten Paletten 2 geeignet. Der Transport erfolgt über Druck- und Zugbewegung 3 durch einen in Formschluss gebrachten Mitnehmer 4 beim Schwenken des Schwenkarms.

Der Schwenkarm ist auf dem als Fahrzeug 5 ausgeführten Flurförderer 100 angeordnet, welcher seinerseits im Gang zwischen zwei Regalen R, R' angeordnet ist und Fahr- und Hubbewegungen 7 zur beidseitigen Bestückung und Entnahme der Regalfächer 6 durchführen kann die über- und nebeneinander angeordnet sind.

Durch den kraftbetriebenen Schwenkarm 1 mit kraftbetriebenem Teleskopausschub 8 in Verbindung mit einer Positioniersteuerung und -regelung werden
a) die erforderlichen Positionen 9 bis 12 der Kraftübertragungsmittel angesteuert
b) die als Mitnehmer 4 ausgeführten Kraftübertragungsmittel in die Palettentaschen 13, 13' gefahren
c) die erforderliche waagerechte Transportbewegung 14 der Kraftübertragungsmittel sichergestellt.

Durch wahlweise Ansteuerung der Positionen 10 oder 11 kann je nach Bedarf die Palette 2 nach rechts oder links abgegeben werden.

Bei der Lastübernahme kann wahlweise die Position 9 oder 12 angesteuert werden. Dadurch kann die Auslagerung wahlweise von links oder rechts erfolgen.

Um die in durchgezogenen Linien und schraffiert gezeigte Palette 2 von der Aufnahmeeinrichtung A auf ein zu einer Seite (in Fig. 1 rechts) des Flurförderers angeordnetes Regalfach abzugeben, ist das Kraftübertragungsmittel M der Verlagerungseinrichtung V mit dem Kraftaufnahmemittel N der Palette in Eingriff bringbar, welches dieser Seite abgewandt ist.

Die Paletten weisen zwei Kraftaufnahmemittel N auf, die seitlich an der Palette angeordnet sind. Um die Palette 2 von Aufnahmeeinrichtung A auf das in Fig. 1 rechts gezeigte Regalfach 6 zu verlagern, ist der Schwenkarm in seine in durchgezogenen Linien dargestellte Position zu bringen, in der der Kugelkopf K in die in Fig. 1 links dargestellte Palettentasche 13 eingreift. Daraufhin wird der Schwenkarm V in die in gestrichelten Linien dargestellten Positionen durch eine Schwenkbewegung W verschwenkt und der Fluid-Zylinder durch die translatorische Bewegung B der Kolbenstange ausgefahren. Sobald die Palette 2 in ihrer endgültigen Position auf dem Regal angeordnet ist, kann der Kugelkopf durch Einfahren des Fluid-Zylinders außer Eingriff mit der Palette gebracht werden. Die Aufnahme einer in Figur rechts dargestellten Palette von einem Regal auf die Aufnahmeeinrichtung A verläuft in umgekehrter Reihenfolge.

Für die Übergabe der Palette von der Aufnahmeeinrichtung A auf das in Fig. 1 links dargestellte Regal R wird der Kugelkopf mit der in der Figur rechts dargestellten Palettentasche 13' in Eingriff gebracht und entsprechend verfahren.

Während der Verlagerung einer Palette 2 erfolgt stets eine waagerechte Transportbewegung 14 des Mitnehmers 4.

### Bezugszeichenliste:

- 100: Flurförderer
- 200: System
- 1: Schwenkarm
- 2: Transportpaletten
- 3: Druck- und Zugbewegung
- 4: Mitnehmer
- 5: Flurförderer
- 6: Regalfächer
- 7: Fahr- und Hubbewegung
- 8: Teleskopausschub
- 9: Übernahmeposition nach rechts (zum Übernehmen einer Palette vom linken Regal auf den Flurförderer)
- 10: Übergabeposition nach rechts (zum Übergeben einer Palette vom Flurförderer nach rechts auf das Regal)
- 11: Übergabeposition nach links
- 12: Übernahmeposition nach links
- 13, 13': Palettentaschen
- 14: waagerechte Transportbewegung des Mitnehmers
- 15: Staubschutzkappe

- A: Güteraufnahmeeinrichtung
- B: translatorische Bewegung
- F: Güteraufnahmefläche
- G: Güter
- H: Hebevorrichtung
- K: Kugelkopf
- L: Längenverstellvorrichtung
- M: Kraftübertragungsmittel
- N: Kraftaufnahmemittel
- P: Palettenkraftübertragungsmittel
- R, R': Regale
- T: Teleskopiereinrichtung
- U: Fluid-Zylinder
- V: Verlagerungseinrichtung
- W: Schwenkbewegung
- Z: Rollen

- S1: Richtung
- S2: Richtung

## Patentansprüche

1. Flurförderer (100), mit einer Hebevorrichtung (H), zum Anheben und Absenken von Gütern (G) - insbesondere von Paletten (2), auf denen Güter (G) angeordnet sind - und mit einer Verlagerungseinrichtung (V) zum Verlagern der Güter (G) relativ zu der Hebevorrichtung (H), **dadurch gekennzeichnet, dass** die Verlagerungseinrichtung (V) Kraftübertragungsmittel (M) umfasst, und von den Kraftübertragungsmitteln (M) eine lineare Transportbewegung (14) durchführbar ist, die durch die Überlagerung einer Schwenkbewegung (W) von Teilen der Verlagerungseinrichtung (V) mit einer translatorischen Bewegung (B) von Teilen der Verlagerungseinrichtung (V) bewirkbar ist, wobei die Verlagerungseinrichtung (V) einen Schwenkarm (1) mit Längenverstellvorrichtung (L) umfasst, wobei der Schwenkarm (1) mit einer Seite schwenkbar an dem übrigen Flurförderer (100) angeordnet ist und an seiner anderen Seite Kraftübertragungsmittel (M) angeordnet sind.

2. Flurförderer nach Anspruch 1, **dadurch gekennzeichnet, dass** die Verlagerungseinrichtung (V) ein Verlagern von Gütern (G) auf die Hebevorrichtung (H) und von der Hebevorrichtung (H) herunter in zwei verschiedenen Richtungen (S1, S2) relativ zur Hebevorrichtung (H) erlaubt.

3. Flurförderer nach Anspruch 1 oder 2, **dadurch gekennzeichnet, dass** die Hebevorrichtung (H) eine Aufnahmeeinrichtung (A) zur Aufnahme der Güter (G) aufweist, die eine Aufnahmefläche (F) umfasst.

4. Flurförderer nach einem der voranstehenden Ansprüche, **dadurch gekennzeichnet, dass** die Längenverstellvorrichtung (L) einen Linearmotor umfasst und eine Teleskopiereinrichtung (T) und der Linearmotor einen Fluid-Zylinder (U) umfasst.

5. System (200) mit einem Flurförderer (100) nach einem der voranstehenden Ansprüche, mit Paletten (2), zur Aufnahme von Gütern (G), wobei die Paletten (2) als Rollpaletten mit Rollen (Z) ausgeführt sind und mit Regalen (R, R'), die Rollflächen für die Rollpaletten bereitstellen.

6. System nach Anspruch 5, wobei die Verlagerungseinrichtung (V) Kraftübertragungsmittel (M) umfasst, **dadurch gekennzeichnet, dass** an den Paletten (2) Kraftaufnahmemittel (N) angeordnet sind und die Kraftaufnahmemittel (N) mit den Kraftübertragungsmitteln (M) zum Bewirken einer Verlagerungskraft auf die Paletten (2) zusammenwirken und die Kraftübertragungsmittel (M) einen Kugelkopf (K) umfassen und die Kraftaufnahmemittel (N) nach unten offene Palettentaschen (13, 13') umfassen.

## Claims

1. Floor conveyor (100), comprising a lifting apparatus (H) for lifting and lowering goods (G), in particular pallets (2) on which goods (G) are arranged, and comprising a shifting device (V) for shifting the goods (G) relative to the lifting apparatus (H), **characterized in that** the shifting device (V) comprises force transmission means (M), and a linear transport movement (14) can be carried out by the force transmission means (M), which movement can be produced by superimposing a pivot movement (W) of parts of the shifting device (V) with a translational movement (B) of parts of the shifting device (V), the shifting device (V) comprising a pivot arm (1) that has a length adjustment apparatus (L), one end of the pivot arm (1) being pivotally arranged on the remainder of the floor conveyor (100) and force transmission means (M) being arranged on the other end of said pivot arm.

2. Floor conveyor according to claim 1, **characterized in that** the shifting device (V) allows goods (G) to be shifted onto the lifting apparatus (H) and downwards from the lifting apparatus (H) in two different directions (S1, S2) relative to the lifting apparatus (H).

3. Floor conveyor according to either claim 1 or claim 2, **characterized in that** the lifting apparatus (H) comprises a receiving device (A) for receiving goods (G), which device comprises a receiving surface (F).

4. Floor conveyor according to any of the preceding claims, **characterized in that** the length adjustment apparatus (L) comprises a linear motor and a telescopic device (T) and the linear motor comprises a fluid cylinder (U).

5. System (200) comprising a floor conveyor (100) according to any of the preceding claims, comprising pallets (2) for receiving goods (G), wherein the pallets (2) are designed as rolling pallets comprising rollers (Z), and comprising shelves (R, R') which provide rolling surfaces for the rolling pallets.

6. System according to claim 5, the shifting device (V) comprising force transmission means (M), **characterized in that** force absorption means (N) are arranged on the pallets (2) and the force absorption means (N) cooperate with the force transmission means (M) in order to produce a shifting force on the pallets (2) and the force transmission means (M) comprise a spherical head (K) and the force absorption means (N) comprise pallet recesses (13, 13') which are open at the bottom.

## Revendications

1. Convoyeur au sol (100), comprenant un dispositif de levage (H), destiné à monter et descendre des marchandises (G), en particulier des palettes (2) sur lesquelles les marchandises (G) sont disposées, et un dispositif de déplacement (V) destinés à déplacer les marchandises (G) par rapport au dispositif de levage (H), **caractérisé en ce que** le dispositif de déplacement (V) comprend un moyen de transmission de force (M) et peut effectuer, par le biais des moyens de transmission de force (M), un mouvement de transport linéaire (14) qui peut être généré par la superposition d'un mouvement de pivotement (W) de parties du dispositif de déplacement (V) à un mouvement de translation (B) de parties du dispositif de déplacement (V), le dispositif de déplacement (V) comprenant un bras pivotant (1) pourvu d'un dispositif de réglage de longueur (L), le bras pivotant (1) étant de manière pivotante sur un côté au niveau de l'autre convoyeur au sol (100) et des moyens de transmission de force (M) étant disposés sur son autre côté.

2. Convoyeur au sol selon la revendication 1, **caractérisé en ce que** le dispositif de déplacement (V) permet le déplacement de marchandises (G) sur le dispositif de levage (H) et depuis le dispositif de levage (H) vers le bas dans deux directions différentes (S1, S2) par rapport au dispositif de levage (H).

3. Transporteur au sol selon la revendication 1 ou 2, **caractérisé en ce que** le dispositif de levage (H) comporte un moyen de réception (A) qui est destiné à recevoir les marchandises (G) et qui comporte une surface de réception (F).

4. Convoyeur au sol selon l'une des revendications précédentes, **caractérisé en ce que** le dispositif de réglage de longueur (L) comprend un moteur linéaire et un dispositif télescopique (T) et le moteur linéaire comprennent un cylindre hydraulique (U).

5. Système (200) comprenant un convoyeur au sol (100) selon l'une des revendications précédentes, des palettes (2) destinées à recevoir des marchandises (G), les palettes (2) étant conçues comme des palettes roulantes munies de roulettes (Z) et des étagères (R, R') fournissant des surfaces de roulement aux palettes roulantes.

6. Système selon la revendication 5, le dispositif de déplacement (V) comprenant des moyens de transmission de force (M), **caractérisé en ce que** des moyens de réception de force (N) sont disposés au niveau des palettes (2) et les moyens de réception de force (N) coopèrent avec les moyens de transmission de force (M) pour générer une force de déplacement sur les palettes (2) et les moyens de transmission de force (M) comportent une tête sphérique (K) et les moyens de réception de force (N) comportent des poches de palette ouvertes (13, 13').
